# EUROPEAN PATENT APPLICATION

(11) **EP 1 244 231 A1**
(43) Date of publication of application: **25.09.2002**
(21) Application number: 01830188.7
(22) Date of filing: 19.03.2001
(51) Int. Cl.: H04B 7/26

(54) **Hybrid frequency band system architecture for terrestrial wireless broadband access applications**

(71) Applicant: TELEFONAKTIEBOLAGET LM ERICSSON, 126 25 Stockholm (SE)
(72) Inventor: Nascimbene, Andrea, 27020 Torre d'Isola, Pavia (IT)
(74) Representative: Vatti, Paolo, Dr. Ing.

(57) **Abstract**

The invention refers to a point to multi-point hybrid frequency band system architecture for terrestrial wireless broadband access applications, operating on bands having high terrestrial frequency (above 20 GHz) in downlink and on bands having low terrestrial bands (below 11 GHz) in uplink.

## Description

This invention relates to a new architecture of hybrid frequency band systems for terrestrial wireless broadband access applications.

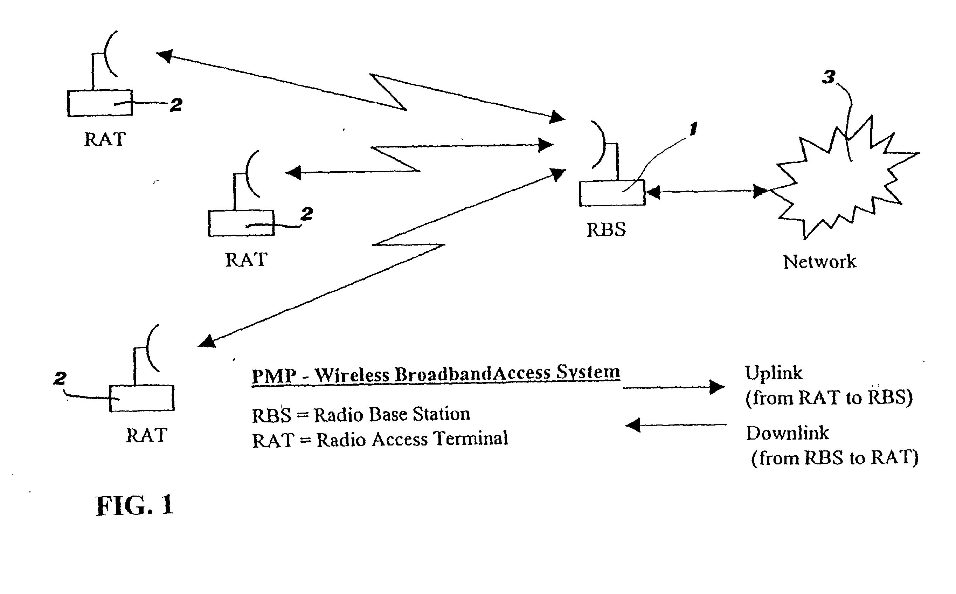

Applications of such a kind, adopting a point to multi-point (PMP) technique, are schematised in Fig. 1 of annexed drawings. A single base station 1 connects many access terminals 2 through a particular means and by using a particular scheme for multiple access. The base station 1 is usually a radio base station (RBS) which interfaces one or more radio access terminals (RAT) through a radio connection. It is usually (but not necessarily) comprised of at least a radio unit, with antenna and modem, so as to make services provided by network 3, to which the radio base station (RBS) is connected, accessible to radio access terminals (RAT).

In the terrestrial wireless broadband access systems, it is expected to support and provide a number of multi-media applications and services, like video on demand (VoD) and fast Internet to a number of users, like small and home business offices, and to residents. The main requirements of these systems can be expressed in terms of capacity (Mbit/s) and of system economy.

As for the capacity, it should be noted that both VoD and Internet services exhibit very different capacity requirements, which give rise to large asymmetries. Indeed, the capacity required in uplink connections (from radio access terminal, RAT, to radio base station, RBS) is typically up to five/ten times smaller than the one required in downlink connections (from RBS to RAT).

As for terminal economy, it should be noted that the RAT cost should be kept as low as possible, above all when considering that a strong competition against the traditional wire technology is expected.

RAT economy mainly depends on the cost of radiofrequency (RF) parts and it is important to note that such a cost is proportional to the frequency: the higher the operating frequency, the higher the cost of the radio unit. Furthermore, the transmission part of the radio unit is the one that most affects the total cost, the receiver cost being by far lower, and so less critical.

The cost of RBS is less critical in the global system economy, because it is shared by a lot of terminals, therefore the cost of each link mainly depends on the one of the terminal itself.

The last consideration affects the frequency bands that usually are world-wide available for fixed wireless service applications (usually referred to also as FS - fixed wireless services -, FWA - fixed wireless access services - or MWS - multi-media wireless systems -). The frequency bandwidth available for the applications to wireless services typically increases proportionally with the frequency itself: the higher the operating frequency, the higher the available bandwidth. For instance, at a frequency lower than about 11 GHz, the available bandwidth is typically at least five times smaller than that available over about 20 GHz.

The table below shows some of the current "harmonised radio frequency channel arrangements for digital terrestrial fixed systems" operating in some of the available bands and the relevant ETSI equipment standards for systems operating on the bands themselves. Note that all the current standards foresee systems operating both the uplink and downlink frequencies in the same band defined by the relevant CEPT recommendation. No provision for cross band operation exists.

| Frequency bands: | CEPT/ERC recommendations: | ETSI normatives: |
|---|---|---|
| 3.4-3.6 GHz | REC 14 - 03 | EN 301 021 |
| 10.7-11.7 GHz | REC 12-06 | EN 301 021 |
| 22.0-20.5 GHz | T/R 13-02 | N 301 213 |
| 31.8-33.4 GHz | REC XX-YY (under discussion) | EN XXX (under discussion) |
| 40.5-43.5 GHz | REC XX-YY (under discussion) | EN XXX (under discussion) |

In conclusion, at present, terrestrial wireless access systems, typically operating on low frequency band (below about 11 GHz), are limited to narrow band applications. In contrast, wireless broadband access systems, typically operating at high frequency bands (over about 20 GHz), are much more expensive, which prevents their successful destination to low market segments, like small offices and home offices (SOHO) and residential markets.

The invention is applied to terrestrial wireless broadband access systems and is a system architecture, capable of a hybrid frequency operation. This architecture mainly operates with the technique called frequency division duplex (FDD) and uses a high terrestrial frequency (above about 20 GHz) in downlink and a low terrestrial frequency (below about 11 GHz) in uplink. Schemes of modulation and encoding, antennae and transceiver parameters are designed and set as appropriate in order to match and counteract the different propagation behaviours in uplink and downlink. In this way, the cellar structure of the system is able to operate with equal cell size both for uplink and downlink. A common device for media access control (MAC) processes the frequency resources up and down, according to the particular employed multiple access scheme, on both RBS and RAT side.

At present there is no information available on the use of wireless terrestrial systems with hybrid frequency band architecture. In the known systems, in fact, the frequency band used in the uplink and in the downlink has been always the same. This situation, besides confirming the use of a single frequency band in each terrestrial wireless communication, can be considered a technical prejudice for the use of systems with different architectures. This prejudice is overcome by the present invention with the idea to use two different frequency bands for the uplink and the downlink, leading to the claimed hybrid frequency band system architecture.

The invention is now described more in depth, on the basis of the annexed drawings, wherein:
Fig. 1 is a general scheme representing the telecommunication system to which the invention applies; and
Fig. 2 is a block diagram representing the structure and the operation of the architecture of hybrid system according to the invention.

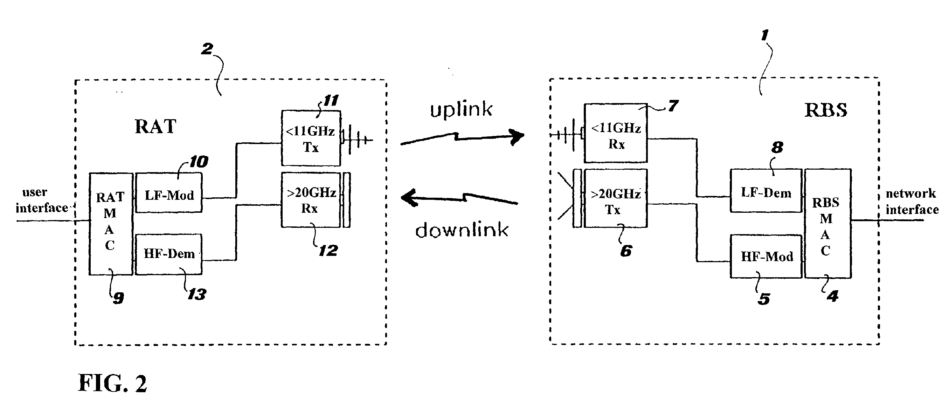

The block diagram in Fig. 2 schematically shows the connection according to the invention between a radio base station RBS and one of the RAT terminals of the system. The radio base station 1, connected to the net by a control device 4 (RBS-MAC) provides for the high-frequency transmission a modulator 5 and a transmitter 6 and for the low-frequency reception a receiver 7 and a demodulator 8. Similarly, a terminal 2, connected to the users by a control device 9 (RAT-MAC) provides for the low-frequency transmission a modulator 10 and a transmitter 11 and for the high-frequency reception a receiver 12 and a demodulator 13. From the said figure, it is apparent that uplink takes place at low frequency, whilst downlink takes place at high frequency. As already mentioned, a high-frequency operation at more than 20 GHz and a low-frequency operation at less than 11 GHz are provided.

Modulators 5 and 10 and demodulators 8 and 13 are designed suitably to allow for the propagation behaviour related to the operation frequency and to the specific system implementation. The control devices 4 and 9 manage the uplink and downlink resources of the radio base station 1 and of the terminal 2, respectively and act as interfaces, with the net 3 and the user, respectively.

The table below exemplifies some possible hybrid usage of the current ERC Rec. and ETSI normative for particular frequency bands:

| Frequency bands: | Recommendation CEPT/ERC: | ETSI normatives: |
|---|---|---|
| Uplink only: 3.4-3.6 GHz | REC 14-03 | EN 301 021 |
| Downlink only: 40.5-43.5 GHz | REC XX-YY (under discussion) | EN XXX (under discussion) |

From the above, it is easily understood that the invention provides two simultaneous, essential benefits, i.e. a large downlink capacity and a low terminal cost, which benefits are essential for the expectations of large development for the market of wireless broadband services.

The benefit of a large downlink capacity is obtained by using high-frequency bands (20 GHz) where, in fact, a wider band is available. The benefit of a low terminal cost is obtained by using low-frequency bands (below about 11 GHz) for uplink. The width of a smaller uplink band, available at low frequency, does not represent a problem for a wide development of BWA applications. It should also be noted that the radiotransmitter 6 (RBS-Tx) and the radioreceiver 12 (RAT-Rx) operate at high frequency, while the radiotransmitter 11 (RAT-Tx) and the radioreceiver 7 (RBS-Rx) operate at low frequency.

Since the transmitting part (Tx) of a radio unit is the one most affecting the total cost of the radio, the following conclusion are drawn about the economy of RBS and RAT:
- high costs of RBS-Tx's and RBS-Rx's are sustainable, because they are shared among a lot of RAT's, independently of the operating frequency;
- the cost of the RAT-Rx is sustainable, because the radio receiver does not strongly affect the total cost.
- The cost of RAT-Tx is rather low, because it operates at low frequency.

It is understood that other embodiments of the invention are possible. It is also understood that the used radio protocol and/or interface can be both standard and tailored on the owner, in any combination by the system, in uplinks and downlinks.

### GLOSSARY OF ABBREVIATIONS

- **BWA =**: Broadband wireless access
- **FDD =**: frequency division duplex
- **FS =**: fixed wireless services
- **FWA =**: fixed wireless access services
- **MAC =**: media access control
- **MWS =**: multi-media wireless systems
- **PMP =**: point to multi-point
- **RAT =**: radio access terminal
- **RBS =**: radio base station
- **RF =**: radiofrequency
- **Rx =**: receiver
- **SOHO =**: small offices
- **Tx =**: transmitter
- **VoD =**: video on demand

## Claims

1. Point to multi-point hybrid frequency band system architecture for terrestrial wireless broadband access applications, **characterised in that** the system operates on bands having high terrestrial frequency in downlink and on bands having low terrestrial high frequency in uplink.

2. Hybrid frequency band system architecture as claimed in claim 1., wherein the system employs high terrestrial frequency bands above 20 GHz in downlink and low terrestrial frequency bands below 11 GHz in uplink.

3. Hybrid frequency band system architecture as claimed in claims 1. and 2., wherein the system employs downlink frequency bands between 40.5 and 43.5 GHz and uplink frequency bands between 3.4 and 3.6 GHz.

4. Hybrid frequency band system architecture as claimed in claims 1. to 3., wherein a radio base station (1) connected to the net (3) by a control device (4: RBS-MAC) includes a transmitter (6) operating at high frequency and a modulator (5) for transmission purposes, and a receiver (7) operating at low frequency and a demodulator (8) for reception purposes, whilst terminals (2) connected to relevant users, each by means of a control device (9: RAT-MAC) include a transmitter (11) operating at low frequency and a modulator (10) for transmission purposes, and a receiver (12) operating at high frequency and a demodulator (13) for reception purposes, said modulators (5, 10) and demodulators (8, 13) being so designed and set as appropriate in order to match and counteract the propagation behaviour relative to operating frequency and to the specific implementation of the system.
